(19) Europäisches Patentamt
European Patent Office
Office européen des brevets

(11) **EP 1 770 804 B1**

(12) **EUROPEAN PATENT SPECIFICATION**

(45) Date of publication and mention
of the grant of the patent:
**24.11.2010 Bulletin 2010/47**

(51) Int Cl.:
**H01M 2/20** (2006.01)

(21) Application number: **06121079.5**

(22) Date of filing: **21.09.2006**

(54) **Battery Pack**

Batteriepack

Bloc-batterie

(84) Designated Contracting States:
**DE FR GB HU**

(30) Priority: **22.09.2005 KR 20050088404**

(43) Date of publication of application:
**04.04.2007 Bulletin 2007/14**

(73) Proprietor: **Samsung SDI Co., Ltd.
Gyeonggi-do (KR)**

(72) Inventor: **Kim, Paul
Gyeonggi-do (KP)**

(74) Representative: **Grey, Ian Michael et al
Venner Shipley LLP
20 Little Britain
London EC1A 7DH (GB)**

(56) References cited:
**WO-A-2004/066446    JP-A- 2005 011 629**

**Description**

Aspects of the present invention relate to a battery pack, and more particularly to a battery pack in which a bent portion of a conductive plate for connecting a plurality of cylindrical battery cells in series with one another does not project from between two battery cells. Accordingly, a short-circuit is minimized from occurring between the conductive plate and a conductive terminal tab, the conductive terminal tabs being electrically connected to one of the electrodes of the cylindrical battery cell and extending close to the bent portion of the conductive plate.

Generally, in a notebook PC and the like, one battery cell is not enough to be a power source. That is, the power source adopted to a notebook PC and the like is usually a battery pack having a plurality of battery cells connected in series and/or in parallel with one another, in order to attain desired voltage and capacity. In such a battery pack, a conductive plate is used to connect the plurality of battery cells in series and/or in parallel. A charge and discharge control circuit and/or a protection circuit can also be mounted with the plurality of battery cells in the battery pack, and the battery cells and various circuits can be contained within a case of the battery pack.

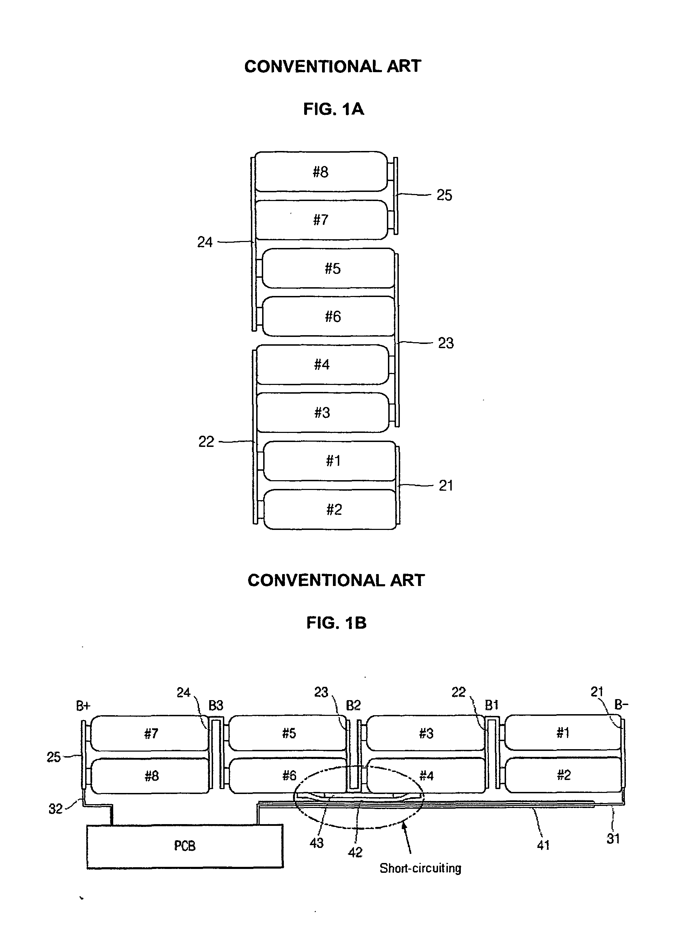

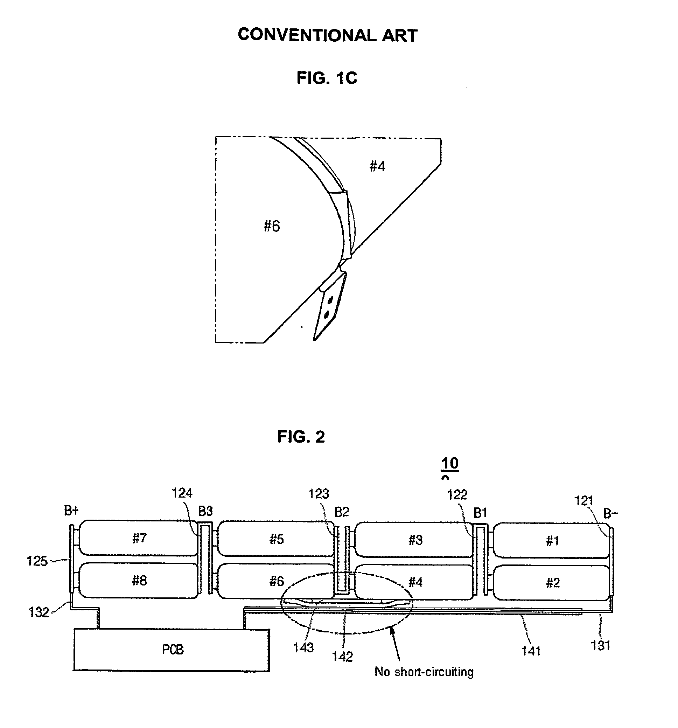

As shown in FIG. 1A, a plurality of conductive plates and a plurality of battery cells are connected. For example, a conductive plate 21 is welded to the right ends of battery cell Nos. 1 and 2, a conductive plate 22 is welded to the left ends of battery cell Nos. 1 through 4, a conductive plate 23 is welded to the right ends of battery cell Nos. 3 through 6, a conductive plate 24 is welded to the left ends of battery cell Nos. 5 through 8, and a conductive plate 25 is welded to the right ends of battery cell Nos. 7 and 8. Both ends of each of the battery cells 1-8 have different polarities. In the drawings, including FIG. 1, the projecting end of the battery cell represents an anode, and the flat end of the battery cell represents a cathode.

Each of the conductive plates 22 through 24 can be bent in the middle point thereof. When viewed in a bent configuration, a first half of each of the conductive plates 22 through 24 is brought into contact with and fixed to the anodes of the corresponding battery cells, and a second half of each of the conductive plates 22 through 24 is brought into contact with and fixed to the cathodes of the corresponding battery cells, to enable the battery cells to be connected in both series and in parallel with one another. Meanwhile, each of the conductive plates 21 and 25 electrically connects the same polarities of two batteries with each other to enable a parallel connection.

The bent configurations of the battery pack of FIG. 1B shows the conductive plates 22 through 24 which are bent at their respective bending points. In FIG. 1B, B+ and B- designate charging terminals to serve as power source parts provided to both ends of the combination of the plurality of battery cells connected in series and in parallel (i.e., the overall battery pack). B+ represents the highest potential terminal as an anode power source part of the overall battery pack, and B- represents the lowest potential terminal as a cathode power source part of the overall battery pack. Power wirings 31, 32 for power discharge can be connected to the respective charging terminals B- and B+. To enable the connection, while not shown in the drawing, the conductive plates 21 and 25 can have a substantially T-shaped configuration. In such a case, the horizontal portion of the T-shaped conductive plates is welded to the anode or the cathode, and the vertical portion of the T-shaped conductive plates is soldered with the power wiring.

In FIG. 1B, B1, B2, and B3 designate respective sensing terminals and serve as portions where the battery cells of different polarities are connected in series. The sensing terminals B1, B2, and B3 represent intermediate potential terminals between the highest potential terminal B+ and the lowest potential terminal B-. Sensing wirings (not shown) for voltage detection can be connected to the sensing terminals B1, B2, and B3. To enable sensing, while not shown in FIG. 1B, the conductive plates 22, 23 and 24 can have a substantially T-shaped configuration when viewed before the conductive plates 22, 23 and 24 are bent. Accordingly, the horizontal portion of the T-shaped conductive plates is welded to the anode or the cathode of battery cells, and the vertical portion of the T-shaped conductive plates is soldered to the sensing wiring.

In the following descriptions, the power wirings 31 and 32 and the sensing wiring (not shown) may be commonly referred to as a terminal tab. The terminal tab may have a wire-shaped configuration or a thin and elongate plate-shaped configuration. The terminal tab may be formed of a metallic material containing nickel.

In FIG. 1B, the sensing wirings are omitted. The power wiring 31, which is soldered to the conductive plate 21 provided to the B- terminal, is connected to the circuit part of a PCB (protection circuit board) after extending over the surfaces of the battery cells connected in series. The power wiring 32, which is soldered to the conductive plate 25 provided to the B+ terminal, is also connected to the circuit part of the PCB.

As shown in FIGS. 1B and 1C, the bent portion of the conductive plate 23 provided to the B2 terminal projects from between the battery cell Nos. 4 and 6. The power wiring 31 extends close to the bent portion of the conductive plate 23. Therefore, measures must be taken to prevent a short-circuit from occurring between the bent portion of the conductive plate 23 and the power wiring 31. To this end, an insulation tape 42 is attached to a transparent tape 43, which fastens the battery cell Nos. 4 and 6 to each other, and the power wiring 31 is sheathed by an insulating cover layer 41.

However, in spite of the measures taken to insulate the projecting bent portion of the conductive plate 23 and the terminal tab (the power wiring 31 of FIG. 1B) extending close to the bent portion of the conductive plate 23 from each other, the insulating members (the insulating cover layer 41 and the insulation tape 42 of FIG. 1B) are likely to be damaged while interposed in a narrow space between the case of the battery cells and the battery cells of the battery pack, and the vibration of a device to which the battery pack is mounted causes wear.

Accordingly, the bent portion of the conductive plate and the terminal tab can be short-circuited, and the battery pack may lose its functionality as a power source device.

Meanwhile, in FIG. 1B, while the bent portions of the conductive plates 22 and 24 in the B1 and B3 terminals also project from between the battery cells, since no terminal tab extends close to the bent portions of the conductive plates 22 and 24, insulation of the bent portions of the conductive plates 22 and 24 is not considered.

Accordingly, aspects of the present invention have been made in view of the above-mentioned problems occurring in the conventional art, and an aspect of the present invention is to have a battery pack in which the bent portion of a conductive plate to connect a plurality of cylindrical battery cells in series with one another does not project from between two battery cells, such that a short-circuit is minimized or prevented from occurring between the conductive plate and a conductive terminal tab electrically connected to one electrode of the cylindrical battery cell and the conductive terminal tab extending close to the bent portion of the conductive plate.

According to an aspect of the present invention, there is a battery pack including a plurality of cylindrical battery cells with each end of different polarities; and a conductive plate with a bent portion, and having a first part and a second part with respect to the bent portion, the first part of the conductive plate in contact with and fixed to a first end of at a first of the cylindrical battery cells and the second part of the conductive plate in contact with and fixed to a second end of at least a second of the cylindrical battery cells to connect the first and the second of the cylindrical battery cells in series with each other, wherein, when viewed from a lengthwise direction of the first and the second of the cylindrical battery cells, the bent portion of the conductive plate does not project out of outer circumferences of the first and the second of the cylindrical battery cells.

According to another aspect of the present invention, the battery pack further includes a conductive terminal tab electrically connected to one electrode of one of the cylindrical battery cells and extending close to the bent portion of the conductive plate.

According to still another aspect of the present invention, when viewed from the lengthwise direction of the first and the second of the cylindrical battery cells, the conductive plate is bent within outer circumferences of the first and the second of the cylindrical battery cells.

According to yet still another aspect of the present invention, the terminal tab and the bent portion are separated from each other.

According to an aspect of the present invention, a method to form a bent portion in a conductive plate for cells of a battery, includes: determining a limit point on the conductive plate of a connection between a first of the cells and the conductive plate; determining a bending point on the conductive plate relative to the limit point based on a given translation distance and a given angle; and bending the conductive plate at the determined bending point.

According to an aspect of the present invention, a battery pack, includes: a first cell; a second cell; and a conductive member connected to the first and second cells, and having a bent portion, wherein the conductive member is connected to the first cell at at least a limit point of a connection between the first cell and the conductive member, and the bent portion is formed on the conductive plate at a bending point relative to the limit point based on a given translation distance and a given angle.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the aspects, taken in conjunction with the accompanying drawings of which:

FIG. 1A is a schematic view illustrating battery cells which are connected in series and in parallel with one another by conventional conductive plates;

FIG. 1B is a schematic view illustrating the structure of a conventional battery pack when the conventional conductive plates are bent;

FIG. 1C is a perspective view illustrating a bent portion of a conductive plate that projects from between series connected battery cells of FIG. 1B;

FIG. 2 is a schematic view illustrating the structure of a battery pack in accordance with an aspect of the present invention;

FIG. 3 is a schematic view illustrating a state in which a conductive plate is bent using a jig according to an aspect of the present invention;

FIG. 4A is an enlarged schematic view for calculating an amount by which a bent portion is retracted between battery cell Nos. 4 and 6 in an aspect of the present invention compared to that of the conventional art; and

FIG. 4B is a schematic view illustrating the battery cell No. 4 or 6 of FIG. 4A when viewed in the lengthwise or axial direction thereof.

Reference will now be made in detail to aspects of the present invention, examples of which are illustrated in the accompanying drawings, wherein like reference numerals refer to the like elements throughout. The aspects are described below in order to explain the present invention by referring to the figures.

FIG. 2 is a schematic view illustrating the structure of a battery pack in accordance with an aspect of the present invention.

As shown, the battery pack 100 in accordance with the aspect of the present invention includes eight cylindrical battery cells numbered 1 through 8, conductive plates 121 through 125 to connect the battery cells 1-8 in series and/or in parallel with one another, and terminal tabs 131 and 132. The battery pack 100 can further include a PCB (protection circuit board) and a case serving as a receptacle to contain these component parts. In various aspects, the terminal tabs 131 and 132 may have a wire-shaped configuration or a thin and elongate plate-shaped configuration. Also, the battery pack 100 may include any number of the battery cells.

Each of the cylindrical battery cells 1-8 is designed such that both ends thereof have different polarities. In the aspect shown, it is assumed that one end of the battery cells 1-8 is electrically connected to an overall anode of an electrode assembly of the battery cells 1-8 and the other end of the battery cells 1-8 is electrically connected to an overall cathode of the electrode assembly of the battery cells 1-8. As the cylindrical battery cells 1-8, a cylindrical secondary battery capable of being charged and discharged can be used. In particular, a cylindrical lithium secondary battery having high operation voltage of 3.6 V and high energy density per unit weight can be used as the cylindrical battery cell. In various aspects, although rechargeable batteries of various kinds may be used, non-rechargeable batteries may also be used.

Each of the conductive plates 122 through 124 has a bent portion. When in the bent configuration, each of the conductive plates 122 through 124 has a first part and a second part. The first part of each of the conductive plates 122 through 124 is brought into contact with and fixed to first ends of two of the cylindrical battery cells and the second part of each of the conductive plates 122 through 124 is brought into contact with and fixed to second ends of other two of the cylindrical battery cells, to connect four of the cylindrical battery cells in series and in parallel with one another. Additionally, conductive plate 121 is brought into contact with and fixed to the second of the two ends (cathode) of the cylindrical battery cell Nos. 1 and 2 to enable parallel connection therebetween, and the conductive plate 125 is brought into contact with and fixed to the first of the two ends (anode) of the cylindrical battery cell Nos. 7 and 8 to enable parallel connection therebetween. Each pair of the cylindrical battery cells that are connected in parallel are referred to as a bank. In various aspects, as discussed above, projecting ends of the battery cells 1-8 represent anodes, and the flat ends of the battery cells 1-8 represent cathodes.

While the two battery cells of each of the banks are connected in parallel with each other by the conductive plates 121 through 125, it is readily understood that aspects of the present invention is not limited by the number of the battery cells. Therefore, aspects of the present invention can also be applied to the battery cells of each of the banks each comprising any number of battery cells that are connected in series with one another by the conductive plates 122 through 124.

In FIG. 2, B$^+$ and B$^-$ designate respective charging terminals and serve as power source parts provided to the ends of the combination of the battery cells 1-8 connected in series and in parallel. B$^+$ represents the highest potential terminal as an overall anode power source part, and B$^-$ represents the lowest potential terminal as an overall cathode power source part. Power wirings 125 and 121 for power discharge can be connected to the charging terminals B$^+$ and B$^-$. To enable the connection, while not shown in the drawing, the conductive plates 122-124 can have a substantially T-shaped configuration. Here, the horizontal portion of the T-shaped configuration is welded or otherwise connected to the anode or the cathode of each of the battery cells 1-8 and comprises a substantially rectangular plate, and the vertical portion of the T-shaped configuration is soldered or otherwise connected to the power wiring.

In FIG. 2, B1, B2, and B3 designate sensing terminals and serve as portions where the battery cells 1-8 of different polarities are connected in series. The sensing terminals B1, B2, and B3 represent intermediate potential terminals between the highest potential terminal B$^+$ and the lowest potential terminal B$^-$. Sensing wirings (not shown) to detect voltage can be connected to the sensing terminals B1, B2, and B3. To enable sensing, while not shown in the drawing, the conductive plates 122-124 can have a substantially T-shaped configuration before the conductive plates 122-124 are respectively bent. In the aspect shown, the horizontal portion of the T-shaped conductive plates is welded or otherwise connected to the respective anode or the cathode of the battery cells 1-8 and comprises a substantially rectangular plate, and the vertical portion of the T-shaped conductive plates is soldered or otherwise connected to the sensing wiring (not shown).

In the following descriptions, the power wirings 131 and 132 and the sensing wiring (not shown) may be commonly referred to as a terminal tab. The terminal tab may have a wire-shaped configuration or a thin and elongate plate-shaped configuration. While the terminal tab may be formed of a metallic material containing nickel, copper or aluminium, the material of the terminal tab of various aspects of the present invention is not limited thereto.

In FIG. 2, the sensing wirings are omitted. The power wiring 131, which is soldered to or otherwise connected to the conductive plate 121 that is provided to the B$^-$ terminal, is connected to the protection circuit of a PCB (protection circuit board) after extending over the surfaces of the battery cells 2, 4, and 6 connected in series and close to the bent portion of the conductive plate 123 of the B2 terminal. The power wiring 132, which is soldered or otherwise connected to the conductive plate 125 of the B+ terminal, is connected to the protection circuit of the PCB. In the case of a battery pack which does not include a PCB, the power wiring 131 can be directly or indirectly connected to the outside terminal (not shown) of the battery pack which in turn is connected to an external electric device.

In the bent portion of the conductive plate 123 of the B2 terminal with reference to FIG. 2, unlike the conventional art, the bent portion does not project from between the battery cell Nos. 4 and 6. That is, when viewing the battery cell No. 4 or 6 in its lengthwise or axial direction, the bent portion of the conductive plate 123 does not project out of the outer circumference (e.g., the plane of the outer circumference) of the cylindrical battery cell No. 4 or 6, which is not the case in the conventional art conductive plate 23 shown in FIG 1C.

As a consequence, even though the power wiring 131 extends close to the bent portion of the conductive plate 123, since the bent portion and the power wiring 131 are sufficiently separated from each other, the possibility of a short-circuit between them is eliminated. Therefore, an insulation member 142 attached to a transparent tape 143 that fastens the battery cell Nos. 4 and 6 to each other and an insulation layer member 141 to sheath the power wiring 131 are not necessarily needed. Of course, the insulation layer member 141 and the insulating member 142 can be used to further minimize the possibility of a short-circuit occurring due to a deformation of the terminal tab, etc., during the use of the battery pack 100.

While the power wiring 131, which is soldered or otherwise connected to the conductive plate 121 of the B- terminal that is the lowest potential terminal, is explained in this aspect, it is to be appreciated that aspects of the present invention are not limited to this specific arrangement. For example, the aspects of the present invention can be applied to the power wiring 132, which is connected to the B+ terminal that is the highest potential terminal. Also, even in the case that a sensing wiring (not shown), which is soldered or otherwise connected to the conductive plate 122 of the B1 terminal being the intermediate potential terminal, extends close to the bent portion of the conductive plate 123 provided to the B2 terminal, since the sensing wiring and the bent portion are separated from each other, the possibility of a short-circuit is eliminated.

Meanwhile, in FIG. 2, while the bent portions of the conductive plates 122 and 124 of the B1 and B3 terminals also project from between the respective battery cells, since no terminal tab extends close to the bent portions of the conductive plates 122 and 124, insulation of the bent portions of the conductive plates 122 and 124 is not considered herein. However, it is understood that in other aspects, the terminals B1 and B3 may also have bent portions that are made not to project from between the respective battery cells.

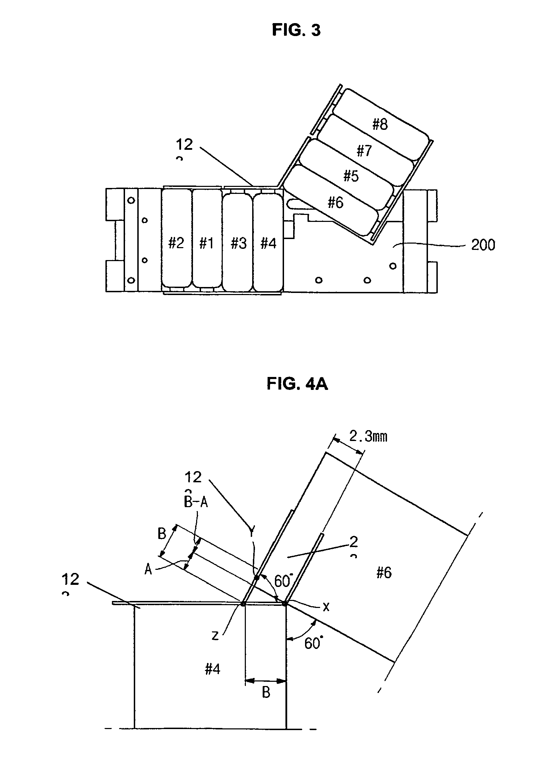

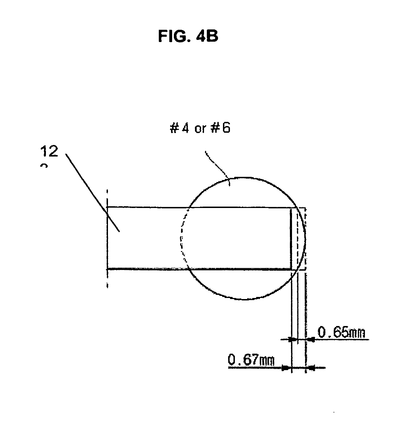

FIG. 3 is a schematic view illustrating a state in which a conductive plate is bent using a jig according to an aspect of the present invention, FIG. 4A is an enlarged schematic view for calculating an amount by which a bent portion is retracted between battery cell Nos. 4 and 6 in an aspect of the present invention compared to that of the conventional art, and FIG. 4B is a schematic view illustrating the battery cell No. 4 or 6 of FIG. 4A which is viewed in the lengthwise or axial direction thereof.

In order to ensure that the bent portion of the conductive plate 123 does not project out of the outer circumference (or the plane of the outer circumference) of the cylindrical battery cell when viewed from the lengthwise or axial direction of the cylindrical battery cell, the battery pack must be manufactured by a method which is different from the battery pack of the conventional art, as shown in FIG. 1A.

As described above, no terminal tab extends close to the bent portions of the conductive plates 122 and 124 of the B1 and B3 terminals. Thus, insulation of the bent portions of the conductive plates 122 and 124 is not considered herein. In such a case, a method of bringing and fixing the conductive plates 122 and 124 of the B1 and B3 terminals into contact with and to the battery cells may be the same as that of the conventional art. In describing this aspect of the present invention, the method of bringing and fixing the conductive plate 123 of the B2 terminal into contact with and to the battery cells will be explained. However, it is understood that when it is necessary to bring the battery case closer to the battery cells, the method according to this aspect can be used to ensure that the bent portions of the conductive plates do not project from between the battery cells connected in series with one another.

Referring to FIGS. 3, 4A and 4B, a method of forming a bent portion according to various aspects of the present invention is described. Unlike the conventional art in which the bent portion of the conductive plate is formed at a point X, in the battery pack 100 according an aspect of the present invention, the bent portion of the conductive plate 123 is formed at a point Y. A point Z does not necessarily designate a portion where the conductive plate is bent with the battery cells arranged in line, but designates a portion which is pressed by a separate mechanism to allow the conductive plate 123 to be easily welded to the battery cell Nos. 4 and 6. The conductive plate 123 can be optionally bent at the point Z, in other aspects.

In the aspect shown, since the battery cells 5 through 8 can be stably supported using a jig 200, the conductive plate 123 can be easily welded or otherwise connected to the battery cell Nos. 3 through 6 by conveniently pressing the Z point or portion or at the Z point or portion.

When the conductive plate 123 of the B2 terminal is welded or otherwise connected to the respective battery cell Nos. 3 through 6, because the bent portion must be formed at the Y point, a portion of the conductive plate 123 which is brought into contact with the battery cell No. 6 is not welded or not welded prematurely. A limit position up to which the conductive plate 123 can be welded or otherwise used in the connection to the battery cell No. 4 is the point Z.

Accordingly, one part of the conductive plate 123 is welded or otherwise connected to one end of the battery cell No. 4 at a limit point which is a position separated from the bending point Y, and another part of the conductive plate 123 is welded or otherwise connected to one end of the battery cell No. 6 at a limit point which is a position separated from the bending point Y. The bending point Y may be located relative to the limit point by a distance of 1.99mm.

As shown in FIG. 4B, the bent portion of the conductive plate 123 is retracted, for example, by at least 0.65 mm to ensure that the bent portion of the conductive plate 123 does not project out of or beyond the outer circumference (or the plane of the outer circumference) of the cylindrical battery cell No. 4 or 6 when viewed from the lengthwise or axial direction of the cylindrical battery cell. For purposes of calculation, as shown in FIG. 4A, an angle between the cylindrical parts of the cylindrical battery cell Nos. 4 and 6 is maintained at an amount, such as 60°, by the jig 200. Then, a position where the conductive plate 123 is welded or otherwise connected to the battery cell No. 6 is moved upward (or translated) by an amount, such as 2.3 mm, with the angle of 60° maintained. The reference numeral 23 denotes the conductive plate according to the conventional art, and the reference numeral 123 denotes the conductive plate according to aspects of the present invention.

Referring to FIG. 4A, since the bent portion is formed at the bending point Y, the amount by which the conductive plate 123 is retracted after bending is (B-A)/2.

This can be calculated as follows.

A = 2.3/tan60° = 1.32 mm,
B = 2.3/sin60° = 2.66 mm,
B-A = 1.34 mm, and
(B-A)/2 = 0.67 mm.

Accordingly, referring to FIG. 4A, the position of the bending point Y relative to Z can be determined by the following equation; Y=Z+[A+(B-A)/2]. In various aspects, when the limit point is Z, the moved or translated distance is T, and the angle is θ, then a distance between the limit point Z and the bending point Y satisfies the equation:

$$\text{distance} = Z + [(T/\tan\theta) + ((T/\sin\theta) - (T/\tan\theta))/2].$$

Referring to FIG. 4B, when viewed from the lengthwise or axial direction of the cylindrical battery cell, the conductive plate 123 that is bent does not project from or beyond the outer circumference (or the plane of the outer circumference) of the cylindrical battery cell. While it was described that the bent portion of the conductive plate is retracted by at least 0.65 mm to ensure that the bent portion of the conductive plate 123 does not project out of or beyond the outer circumference (or the plane of the outer circumference) of the cylindrical battery cell No. 4 or 6 when viewed from the lengthwise or axial direction of the cylindrical battery cell, in this aspect, the bent portion is retracted by 0.67 mm.

Accordingly, as the conductive plate 123 does not project from between the two battery cells, the possibility of the bent portion of the conductive plate 123 to interfere with the conductive terminal tab electrically connected to one electrode of the cylindrical battery cell and extending close to the bent portion of the conductive plate 123 is eliminated. Also, the interference does not occur between the insulation member sheathing the terminal tab and the bent portion.

Meanwhile, in the construction of the battery pack shown in FIG. 2, if the power wiring 131 extends over the battery cell Nos. 1, 3, 5 and 7, the bent portions of the conductive plates 122 and 124 provided to the B1 and B3 terminals will be restrained not to extend out of or beyond the outer circumference of each of the cylindrical battery cells.

As is apparent from the above description, the battery pack according to aspects of the present invention has advantages in that, since the bent portion of a conductive plate for connecting a plurality of cylindrical battery cells in series with one another does not project from between two battery cells, a short-circuit is minimized or prevented between the conductive plate and a conductive terminal tab electrically connected to one electrode of the cylindrical battery cell and extending close to the bent portion of the conductive plate.

Although a few aspects of the present invention have been shown and described, it would be appreciated by those skilled in the art that changes may be made in this aspect that still fall within the scope of the appended claims.

**Claims**

**1.**   A battery pack, comprising

first and second cylindrical battery cells aligned such that an end surface of the first cell faces an end surface of the second cell, said cell end surfaces each defining an electrode of different polarity; and
a conductive plate extending between the end surfaces and having a bent portion, the conductive plate connecting the electrodes of the cylindrical battery cells in series with each other,
**characterised in that** the bent portion of the conductive plate does not project beyond a region defined by the facing end surfaces of the cylindrical battery cells.

2. The battery pack as set forth in claim 1, further comprising:

a conductive terminal tab electrically connected to one electrode of one of the cylindrical battery cells and extending close to the bent portion of the conductive plate.

3. The battery pack as set forth in claim 1 or claim 2, wherein the bent portion of the conductive plate lies within the region defined by the facing end surfaces of the cylindrical battery cells.

4. The battery pack as set forth in claim 2, wherein the terminal tab and the bent portion are separated from each other.

5. The battery pack as set forth in claim 4, wherein the terminal tab includes an insulating layer member, and the insulating layer member and the bent portion are separated from each other.

6. The battery pack as set forth in any of claims 2, 4 or 5, further comprising a highest potential terminal and a lowest potential terminal, wherein the terminal tab is electrically connected to the highest potential terminal or the lowest potential terminal of the cylindrical battery cells connected in series.

7. The battery pack as set forth in any of claims 2, 4 or 5, further comprising an intermediate potential terminal, a highest potential terminal, and a lowest potential terminal, wherein the terminal tab is electrically connected to the intermediate potential terminal between the highest potential terminal and the lowest potential terminal of the cylindrical battery cells connected in series.

8. The battery pack as set forth in any of claims 2 or 4 to 7, further comprising a protection circuit board with a protection circuit, wherein the terminal tab is connected to the protection circuit of the protection circuit board.

9. The battery pack as set forth in any preceding claim, comprising pairs of first and second cylindrical battery cells and the conductive plate connects cells of each pair in parallel, another conductive plate connecting together the other ends of the cylindrical battery cells arranged in parallel.

10. The battery pack as set forth in any preceding claim, wherein the conductive plate comprises a first part and a second part separated by the bent portion, the first part of the conductive plate being welded to one end of at least one cylindrical battery cell and the second part being welded to the other end of at least another cylindrical battery cell, respectively.

11. The battery pack as set forth in any preceding claim, wherein the bent portion of the conductive plate is receded from the outer circumferences of the first and the second of the cylindrical battery cells.

12. The battery pack according to any preceding claim, wherein the conductive member is connected to the first cell at at least a limit point (Z) and the bent portion is formed on the conductive plate at a bending point (Y) relative to the limit point (Z) based on a given translation distance (T) and a given angle (θ).

13. The battery pack of claim 12, wherein the given angle is 60° and the given translation distance is 2.3 mm.

14. The battery pack of claim 12, wherein the bending point is located relative to the limit point by a distance of 1.99 mm.

15. The battery pack of claim 12, wherein the limit point Z, the given translation distance T, the given angle θ, and a distance between the limit point and the bending point satisfies the equation:

$$\text{distance} = Z + [(T/\tan\theta) + ((T/\sin\theta) - (T/\tan\theta))/2].$$

16. A method of forming a battery pack comprising first and second cells aligned so that the end face of a first cell faces an end face of the second cell, said end surfaces each defining an electrode having different polarities, and a conductive plate extending between the end surfaces, the conductive plate connecting the electrodes of the cylindrical battery cells in series with each other, the method comprising the steps of bending the conductive plate to form a bent portion that does not protrude beyond a region defined by the facing end surfaces of said cylindrical battery cells.

17. A method of forming a battery pack according to claim 16, comprising:

   determining a limit point (Z) on the conductive plate of a connection between a first of the cells and the conductive plate;
   determining a bending point (Y) on the conductive plate relative to the limit point (Z) based on a given translation distance (T) and a given angle (θ); and
   bending the conductive plate at the determined bending point.

18. The method of claim 17, wherein the given angle is 60° and the given translation distance is 2.3 mm.

19. The method of claim 17, wherein the bending point is located relative to the limit point by a distance of 1.99 mm.

20. The method of claim 17, wherein the limit point is Z, the given translation distance is T, the given angle is θ, and a distance between the limit point and the bending point satisfies the equation:

$$\text{distance} = Z + [(T/\tan\theta) + ((T/\sin\theta) - (T/\tan\theta))/2].$$

**Patentansprüche**

1. Batteriepack, umfassend
   erste und zweite zylindrische Batteriezellen, die derart ausgerichtet sind, dass eine Endoberfläche der ersten Zelle einer Endoberfläche der zweiten Zelle gegenüberliegt, wobei die Zellen-Endoberflächen jeweils eine Elektrode verschiedener Polarität definieren; und
   eine leitende Platte, die zwischen den Endoberflächen vorhanden ist und einen gebogenen Anteil aufweist, wobei die leitende Platte die Elektroden der zylindrischen Batteriezellen in Reihe miteinander verbindet,
   **dadurch gekennzeichnet, dass** der gebogene Anteil der leitenden Platte nicht über eine Region hervorragt, die durch die gegenüberliegenden Endoberflächen der zylindrischen Batteriezellen definiert ist.

2. Batteriepack nach Anspruch 1, weiter umfassend:

   eine leitende Anschlusslasche, die elektrisch mit einer Elektrode einer der zylindrischen Batteriezellen verbunden ist und sich nahe zu dem gebogenen Anteil der leitenden Platte erstreckt.

3. Batteriepack nach Anspruch 1 oder Anspruch 2, wobei der gebogene Anteil der leitenden Platte innerhalb der Region liegt, die durch die gegenüberliegenden Endoberflächen der zylindrischen Batteriezellen definiert wird.

4. Batteriepack nach Anspruch 2, wobei die Anschlusslasche und der gebogene Anteil voneinander getrennt sind.

5. Batteriepack nach Anspruch 4, wobei die Anschlusslasche ein isolierendes Schichtglied enthält und das isolierende Schichtglied und der gebogene Anteil voneinander getrennt sind.

6. Batteriepack nach einem der Ansprüche 2, 4 oder 5, weiter umfassend einen Anschluss mit höchstem Potenzial und einen Anschluss mit niedrigstem Potenzial, wobei die Anschlusslasche elektrisch mit dem Anschluss mit höchstem Potenzial oder dem Anschluss mit niedrigstem Potenzial der in Reihe verbundenen zylindrischen Batteriezellen verbunden ist.

7. Batteriepack nach einem der Ansprüche 2, 4 oder 5, weiter umfassend einen Anschluss mit Zwischenpotenzial, einen Anschluss mit höchstem Potenzial und einen Anschluss mit niedrigstem Potenzial, wobei die Anschlusslasche elektrisch mit dem Anschluss mit Zwischenpotenzial zwischen dem Anschluss mit höchstem Potenzial und dem Anschluss mit niedrigstem Potenzial der in Reihe verbundenen zylindrischen Batteriezellen verbunden ist.

8. Batteriepack nach einem der Ansprüche 2, 4 oder 7, weiter umfassend eine Schutzschaltungsplatte mit einer Schutzschaltung, wobei die Anschlusslasche mit der Schutzschaltung der Schutzschaltungsplatte verbunden ist.

9. Batteriepack nach einem der vorstehenden Ansprüche, umfassend Paare von ersten und zweiten zylindrischen Batteriezellen, wobei die leitende Platte Zellen jedes Paars in Parallelschaltung verbindet und eine andere leitende Platte die anderen Enden der parallel angeordneten zylindrischen Batteriezellen miteinander verbindet.

10. Batteriepack nach einem der vorstehenden Ansprüche, wobei die leitende Platte einen ersten Teil und einen zweiten Teil umfasst, die durch den gebogenen Anteil getrennt sind, wobei der erste Teil der leitenden Platte an ein Ende mindestens einer zylindrischen Batteriezelle geschweißt ist bzw. der zweite Teil an das andere Ende mindestens einer anderen zylindrischen Batteriezelle geschweißt ist.

11. Batteriepack nach einem der vorstehenden Ansprüche, wobei der gebogene Anteil der leitenden Platte von den Außenumfängen der ersten und der zweiten der zylindrischen Batteriezellen rückversetzt ist.

12. Batteriepack nach einem der vorstehenden Ansprüche, wobei das leitende Glied mit der ersten Zelle an mindestens einem Grenzpunkt (Z) verbunden ist und der gebogene Anteil auf der leitenden Platte an einem Biegepunkt (Y) relativ zu dem Grenzpunkt (Z) basierend auf einer gegebenen Translationsdistanz (T) und einem gegebenen Winkel (□) geformt ist.

13. Batteriepack nach Anspruch 12, wobei der gegebene Winkel 60° beträgt und die gegebene Translationsdistanz 2,3 mm beträgt.

14. Batteriepack nach Anspruch 12, wobei der Biegepunkt in einer Distanz von 1,99 mm relativ zu dem Grenzpunkt angeordnet ist.

15. Batteriepack nach Anspruch 12, wobei der Grenzpunkt Z, die gegebene Translationsdistanz T, der gegebene Winkel □ und eine Distanz zwischen dem Grenzpunkt und dem Biegepunkt die folgende Gleichung erfüllt:

```
Distanz = Z+[(T/tan□) + ((T/sin□)-(T/tan □))/2].
```

16. Verfahren zum Bilden eines Batteriepacks, der erste und zweite Zellen umfasst, die derart ausgerichtet sind, dass eine Endoberfläche einer ersten Zelle einer Endoberfläche der zweiten Zelle gegenüberliegt, wobei die Endoberflächen jeweils eine Elektrode verschiedener Polarität definieren, und eine leitende Platte, die zwischen den Endoberflächen vorhanden ist, wobei die leitende Platte die Elektroden der zylindrischen Batteriezellen in Reihe miteinander verbindet, das Verfahren die Schritte umfassend, die leitende Platte zu biegen, um einen gebogenen Anteil zu bilden, der nicht über eine Region hervorragt, die durch die gegenüberliegenden Endoberflächen der zylindrischen Batteriezellen definiert ist.

17. Verfahren zum Bilden eines Batteriepacks nach Anspruch 16, umfassend:

Bestimmen eines Grenzpunkts (Z), auf der leitenden Platte, einer Verbindung zwischen einer ersten der Zellen und der leitenden Platte;
Bestimmen eines Biegepunkts (Y) auf der leitenden Platte relativ zu dem Grenzpunkt (Z) basierend auf einer gegebenen Translationsdistanz (T) und einem gegebenen Winkel (□); und
Biegen der leitenden Platte an dem bestimmten Biegepunkt.

18. Verfahren nach Anspruch 17, wobei der gegebene Winkel 60° beträgt und die gegebene Translationsdistanz 2,3 mm beträgt.

19. Verfahren nach Anspruch 17, wobei der Biegepunkt in einer Distanz von 1,99 mm relativ zu dem Grenzpunkt angeordnet ist.

20. Verfahren nach Anspruch 17, wobei der Grenzpunkt Z ist, die gegebene Translationsdistanz T ist, der gegebene Winkel □ ist und eine Distanz zwischen dem Grenzpunkt und dem Biegepunkt die folgende Gleichung erfüllt:

$$\mathtt{Distanz=Z+[(T/tan\square) + ((T/sin\square)-(T/tan \square))/2].}$$

**Revendications**

1. Bloc batterie, comprenant
   des première et seconde cellules de batterie cylindriques alignées de telle sorte qu'une surface d'extrémité de la première cellule fasse face à une surface d'extrémité de la seconde cellule, lesdites surfaces d'extrémité de cellule définissant chacune une électrode d'une polarité différente ; et
   une plaque conductrice qui s'étend entre les surfaces d'extrémité et a une partie courbée, la plaque conductrice connectant les électrodes des cellules de batterie cylindriques en série l'une avec l'autre,
   **caractérisé en ce que** la partie courbée de la plaque conductrice ne fait pas saillie au delà d'une région définie par les surfaces d'extrémité opposées des cellules de batterie cylindriques.

2. Bloc batterie selon la revendication 1, comprenant en outre :

   une languette terminale conductrice connectée électriquement à une électrode de l'une des cellules de pile cylindriques et s'étendant près de la partie courbée de la plaque conductrice.

3. Bloc batterie selon la revendication 1 ou la revendication 2, dans lequel la partie courbée de la plaque conductrice repose dans la région définie par les surfaces d'extrémité opposées des cellules de batterie cylindriques.

4. Bloc batterie selon la revendication 2, dans lequel la languette terminale et la partie courbée sont séparées l'une de l'autre.

5. Bloc batterie selon la revendication 4, dans lequel la languette terminale comporte un élément de couche isolant, et l'élément de couche isolant et la partie courbée sont séparés l'un de l'autre.

6. Bloc batterie selon l'une quelconque des revendications 2, 4 ou 5, comprenant en outre une borne au potentiel le plus élevé et une borne au potentiel le plus bas, la languette terminale étant connectée électriquement à la borne au potentiel le plus élevé ou à la borne au potentiel le plus bas des cellules de batterie cylindriques connectées en série.

7. Bloc batterie selon l'une quelconque des revendications 2, 4 ou 5, comprenant en outre une borne au potentiel intermédiaire, une borne au potentiel le plus élevé et une borne au potentiel le plus bas, la languette terminale étant connectée électriquement à la borne au potentiel intermédiaire entre la borne au potentiel le plus élevé et la borne au potentiel le plus bas des cellules de batterie cylindriques connectées en série.

8. Bloc batterie selon l'une quelconque des revendications 2 ou 4 à 7, comprenant en outre une carte de circuit de protection dotée d'un circuit de protection, la languette terminale étant connectée au circuit de protection de la carte de circuit de protection.

9. Bloc batterie selon l'une quelconque des revendications précédentes, comprenant des paires de première et seconde cellules de batterie cylindriques et la plaque conductrice connectant les cellules de chaque paire en parallèle, une autre plaque conductrice connectant ensemble les autres extrémités des cellules de batterie cylindriques agencées en parallèle.

10. Bloc batterie selon l'une quelconque des revendications précédentes, dans lequel la plaque conductrice comprend une première partie et une seconde partie séparées par la partie courbée, la première partie de la plaque conductrice étant soudée à une extrémité d'au moins une cellule de batterie cylindrique et la seconde partie étant soudée à l'autre extrémité d'au moins une autre cellule de batterie cylindrique, respectivement.

11. Bloc batterie selon l'une quelconque des revendications précédentes, dans lequel la partie courbée de la plaque conductrice est en retrait par rapport aux circonférences externes des première et seconde des cellules de batterie cylindriques.

12. Bloc batterie selon l'une quelconque des revendications précédentes, dans lequel l'élément conducteur est connecté à la première cellule à au moins un point limite (Z) et la partie courbée est formée sur la plaque conductrice à un point de courbage (Y) par rapport au point limite (Z) selon une distance de translation donnée (T) et un angle donné (θ).

13. Bloc batterie selon la revendication 12, dans lequel l'angle donné est de 60° et la distance de translation donnée est de 2,3 mm.

14. Bloc batterie selon la revendication 12, dans lequel le point de courbage est situé par rapport au point limite à une distance de 1,99 mm.

15. Bloc batterie selon la revendication 12, dans lequel le point limite Z, la distance de translation données T, l'angle donné θ, et une distance entre le point limite et le point de courbage satisfont l'équation :

$$\text{distance} = Z + [(T/\tan\theta) + ((T/\sin\theta) - (T/\tan\theta))/2].$$

16. Procédé de formation d'un bloc batterie, comprenant des première et seconde cellules de batterie cylindriques alignées de telle sorte que la face d'extrémité de la première cellule fasse face à une face d'extrémité de la seconde cellule, lesdites surfaces d'extrémité définissant chacune une électrode de polarités différentes, et une plaque conductrice qui s'étend entre les surfaces d'extrémité, la plaque conductrice connectant les électrodes des cellules de batterie cylindrique en série l'une avec l'autre, le procédé comprenant les étapes de courbage de la plaque conductrice afin de former une partie courbée qui ne fait pas saillie au delà d'une région définie par les surfaces d'extrémité opposées desdites cellules de batterie cylindriques.

17. Procédé de formation d'un bloc batterie selon la revendication 16, comprenant :

la détermination d'un point limite (Z) sur la plaque conductrice d'une connexion entre une première des cellules et la plaque conductrice ;
la détermination d'un point de courbage (Y) sur la plaque conductrice par rapport au point limite (Z) selon une distance de translation donnée (T) et un angle donné (θ) ; et
le courbage de la plaque conductrice au point de courbage déterminé.

18. Procédé selon la revendication 17, dans lequel l'angle donné est de 60° et la distance de translation donnée est de 2,3 mm.

19. Procédé selon la revendication 17, dans lequel le point de courbage est situé par rapport au point limite à une distance de 1,99 mm.

20. Procédé selon la revendication 17, dans lequel le point limite est Z, la distance de translation donnée est T, l'angle donné est θ, et une distance entre le point limite et le point de courbage satisfait l'équation :

$$\text{distance} = Z + [(T/\tan\theta) + ((T/\sin\theta) - (T/\tan\theta))/2].$$

## CONVENTIONAL ART

## FIG. 1A

## CONVENTIONAL ART

## FIG. 1B

CONVENTIONAL ART

FIG. 1C

#4

#6

FIG. 2

$\underline{10}$

B+    124    B3    123    B2    122    B1    121    B-

125

#7    #5    #3    #1

#8    #6    #4    #2

132

PCB

143    142

No short-circuiting

141    131

## FIG. 3

## FIG. 4A

**FIG. 4B**

#4 or #6

12

0.65mm

0.67mm